# EUROPEAN PATENT APPLICATION

(11) **EP 2 497 862 A1**
(43) Date of publication of application: **12.09.2012**
(21) Application number: 10828430.8
(22) Date of filing: 07.05.2010
(51) Int. Cl.: E02B 15/06, E02B 15/04, E02B 15/10

(54) **METHOD FOR USING AIR TO REMOVE PRECIPITATED CONTAMINATING OIL**

(30) Priority: 06.11.2009 KR 20090107054
(71) Applicant: Lee, Jae Sik, Gyeongsangnam-do 650-150 (KR); Kim, Gyoung Hee, Goyang si, Gyeonggi-do 410-709 (KR)
(72) Inventor: Lee, Jae Sik, Gyeongsangnam-do 650-150 (KR); Kim, Gyoung Hee, Goyang si, Gyeonggi-do 410-709 (KR)
(74) Representative: Meissner, Bolte & Partner
(86) International application number: PCT/KR2010/002901
(87) International publication number: WO 2011/055894

(57) **Abstract**

The present invention relates to a method of removing deposited pollutant oil using air, and more particularly to a method of removing pollutant oil, which comprises injecting compressed air when oil has been deposited at the bottom of the sea, and injecting compressed air while supplying water when oil has been deposited on water-free sand, rock or soil, thereby degassing the oil while floating the remaining degassed oil on the water surface. More specifically, the method: introducing an air jet at the bottom below the water surface; injecting compressed air from the air jet, thereby raising water and sand or soil together with the compressed water, discharging gas by the kinetic energy of air bubbles caused by the compressed air flow to degas oil, and floating the degassed oil on the water surface; and removing the floated oil.

## Description

### [Technical Field]

The present invention relates to a method of removing deposited pollutant oil using air, and more particularly to a method of removing pollutant oil, which comprises injecting compressed air when oil has been deposited at the bottom of the sea, and injecting compressed air while supplying water when oil has been deposited on water-free sand, rock or soil, thereby degassing the oil while floating the remaining degassed oil on the water surface.

### [Background Art]

In general, the sinking of a ship in the sea or oil spilled from the ship pollutes the seawater to damage the ecosystem and cause the death of organisms that live in marine farms and the like.

A general method for removing oil that is the main cause of seawater pollution is to sprinkle an emulsifying agent. Another method comprises installing an oil fence to prevent oil from spreading, and then floating an oil removal vessel to remove oil within the oil fence.

However, sprinkling of the emulsifying agent and the like can remove oil on the seawater surface, but has the problem of causing secondary environmental pollution due to the emulsifying agent. The oil removal vessel used in the prior art is heavy in overall weight, because the structure of an oil removal apparatus mounted in the vessel. In addition, because a structure allowing the oil removal apparatus to ascend and descend is not installed in the vessel, the oil removal apparatus placed below the seawater level a lot of inconvenience during shipping.

Also, an oil spill on the sea damages not only the marine ecosystem but also the mud flat or natural ecosystem of the coast adjacent to the area in which the oil spill occurred.

This oil spill has a significant problem that pollutes the seawater itself, and in addition, the spilled oil spreads to the coast by a tide to pollute the coast. Particularly, at low tide, the spilled oil remains on the tidal flat, and as a result, it pollutes the areas surrounding the coast and causes a serious problem leading to natural disasters.

In the case of an oil spill as described above, the area and amount of damage varies depending on the initial response to the oil spill, but in the case of an oil spill on the sea, an operation for preventing the oil floating on the sea from spreading is mainly carried out, and the oil entering the coast is left to a defenseless state, thus causing a great deal of damage.

However, in the prior art, there was neither equipment nor method either for effectively separating and removing oil, which entered the coast after the above-described oil spill and deposited on the mud flat or sand on the coast, or for effectively separating and removing only the oil. Thus, because the oil attached to rocks, gravel or base rocks was manually removed by cleaning up the oil, lots of time, labor and cost were required to remove the oil.

Also, in the manual process of removing the deposited oil in the areas surrounding the coast as described above, the oil that penetrated into the sand or mud flat of the areas is more difficult to remove, and thus it gradually penetrates deeper and leads to a more serious natural disaster, so that it remains as a natural disaster over several tens of years.

In the prior art, a method of removing oil that enters the coast due to an oil spill has not yet been provided. Accordingly, it is urgently required to develop this method.

Meanwhile, in the case of the oil spill in Taean (the west coast of Korea) in December, 2007, many marine spill response companies participated in removing the spilled oil, but most of the companies mainly used water pumps and high-pressure pumps to clean up the oil spill. Also, these companies had no experience in removing oil entering the coast, and they attempted to remove the oil deposited on the mud flat or sand using water pumps or high-pressure pumps. However, the amount of oil floating on the water surface was small, and in most cases, the floated oil precipitated again due to its properties.

Namely, in the initial stage of oil spill, low-boiling-point fractions such as methane, ethane, propane and butane first evaporate from the spilled oil.

Then, the remaining oil fractions float on the seawater surface and pollute the surrounding environment, and the highly volatile light oil fractions gradually evaporate to the atmosphere, so that the specific gravity of the oil on the seawater surface gradually increases.

Moreover, heavy oil fractions such as Bunker-C oil and asphalt, which have a specific gravity higher than that of water, gradually precipitate from water or are deposited on sand, mud flats or sedimentary soil, and thus are difficult to remove naturally. In addition, the deposited oil releases toxic substances over a long period of time to cause an environmental pollution.

### [Disclosure]

### [Technical Problem]

The present invention has been made in order to solve the above-described problems occurring in the prior art, and it is an object of the present invention to provide a method of removing deposited pollutant oil using air, which is environmentally friendly and can reduce cost and shorten a working period, the method comprising injecting compressed air when oil has been deposited at the bottom of the sea, and injecting compressed air while supplying water when oil has been deposited on water-free sand, rock or soil, thereby degassing the oil while floating the remaining degassed oil on the water surface.

### [Technical Solution]

To achieve the above object, the present invention provides a method of removing deposited pollutant oil using air, which comprises: introducing an air jet at the bottom below the water surface; injecting compressed air from the air jet, thereby raising water and sand or soil together with the compressed water, discharging gas by the kinetic energy of air bubbles caused by the compressed air flow to degas oil, and floating the degassed oil on the water surface; and removing the floated oil.

### [Advantageous Effects]

According to the method of the present invention, not only oil deposited at the bottom of the sea, but also oil deposited on water-free sand, rock and soil can be removed in an environmentally friendly manner only with water and air, and oil can be completely removed by one operation, thus reducing the cost for removal of oil and shortening the working period.

### [Description of Drawings]

FIG. 1 is a process flow chart showing a method for removing oil according to a first embodiment of the present invention.
FIGS. 2 to 11 are photographs showing each step of the method shown in FIG. 1.
FIGS. 12 to 16 are photographs showing the ecosystem after removing oil according to the first embodiment of the present invention.
FIG. 17 is a process flow chart showing a method for removing oil according to a second embodiment of the present invention.
FIG. 18 is a photograph showing a compression air injection step in the method shown in FIG. 17.
FIG. 19 is a process flow chart showing a method for removing oil according to a third embodiment of the present invention.
FIGS. 20 to 25 are photographs showing each step of the method shown in FIG. 19.
FIGS. 26 to 27 show a comparison between before and after removing oil according to the third embodiment of the present invention.
FIG. 28 is a process flow chart showing a method for removing oil according to a fourth embodiment of the present invention.
FIGS. 29 is a photograph showing a compression air injection step in the method shown in FIG. 29.

### [Best Mode]

Hereinafter, the construction and operation of the present invention will be described in detail with reference to the accompanying drawings.

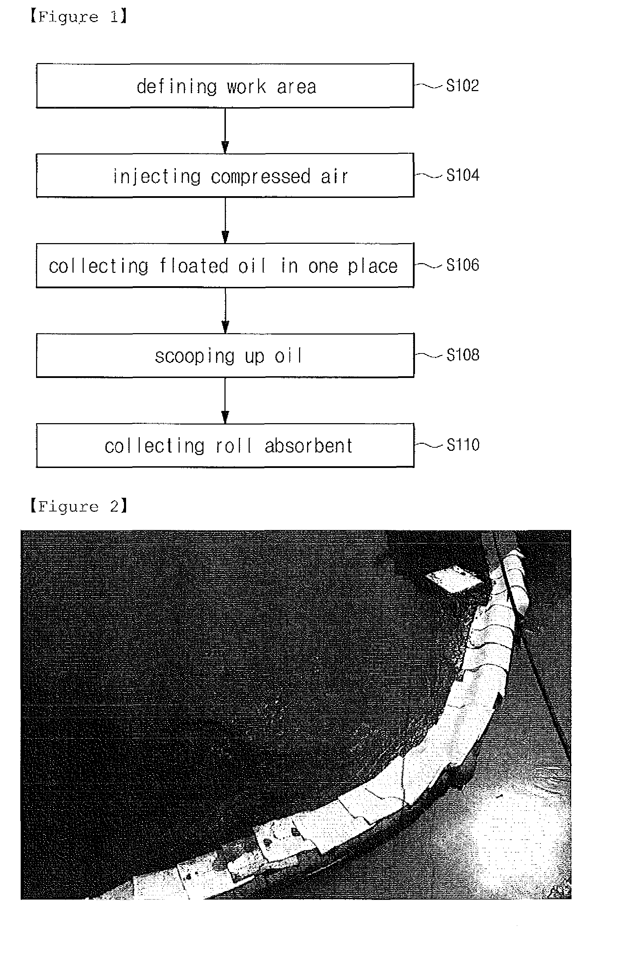

FIG. 1 is a process flow chart showing a method for removing oil according to a first embodiment of the present invention, and FIGS. 2 to 11 are photographs showing each step of the method shown in FIGS. 1 and sequentially show operations of removing oil deposited on the sea bottom.

As shown in FIG. 1, a work area from which oil is to be removed using air according to the present invention is defined such that oil does not flow in or out of the work area (S102).

For this purpose, the work area is defined by an oil boom to install a fence, and a safety bar with an adsorbent is mounted on the oil boom, so that oil is prevented from overflowing due to an air wavelength and can be absorbed rapidly (see FIGS. 2).

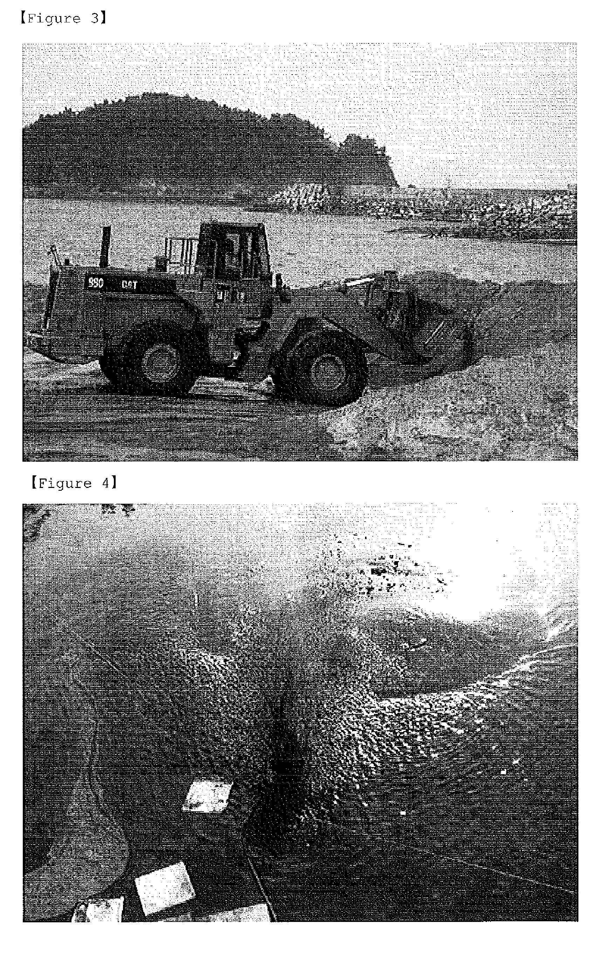

If the work area is close to the coast, a bank is built at the coast using a bulldozer in order to prevent secondary pollution (see FIG. 3).

Also, a roll adsorbent is provided in the oil boom, so that floating oil can be collected in one place.

Then, an air jet is introduced at the bottom of the work area, and when compressed air is injected through the air jet, water and sand or soil will rise by the strong pressure of the compressed air (S104).

At the same time, oil deposited at the bottom of the work area or floating on the seawater surface will be degassed by the interaction between water, the compressed air and sand or soil, while the oil will float on the seawater surface (see FIG. 4).

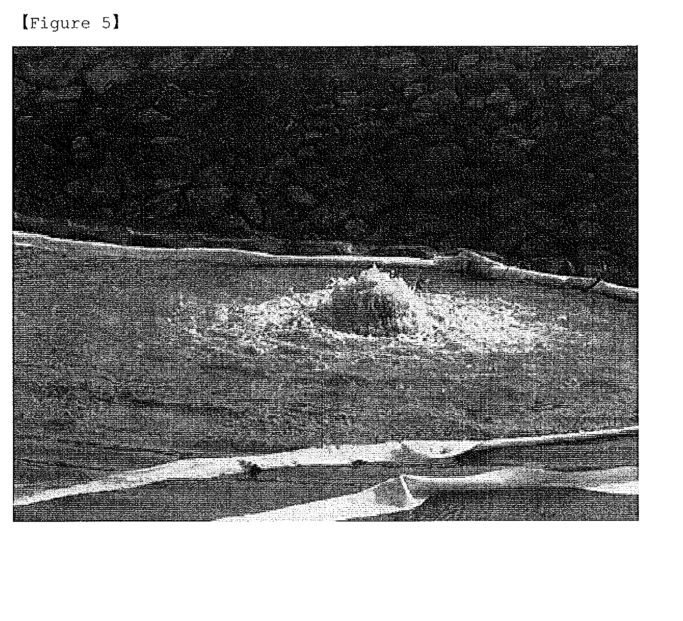

FIG. 5 shows that gas and oil spurt as a result of injecting compressed air from the air jet to the bottom of a stone wall such as a breakwater.

More specifically, oil contains carbon (84-87%) and hydrogen (11-19%) as main components and also contains small amounts of sulfur, nitrogen and oxygen. It is a liquid having a peculiar odor and is a complex hydrocarbon compound.

The oil contains methane (CH₄) and ethane (C₂H₆) in the uppermost layer, propane (C₃H₈) and (C₄H₁₀) in the middle layer, and kerosene, bunker-C oil and asphalt (residual oil) in the lowest layer in that order according to specific gravity.

Meanwhile, bubbles produced in liquid have a kind of energy and remove contaminants from the laundry using kinetic energy caused by, for example, the production and separation of air bubbles.

When an oil spill occurs, low-specific-gravity components such as methane, ethane, propane and butane evaporate into the atmosphere immediately after the oil spill, but light oil fractions, such as kerosene and gasoline, and heavy oil fractions, such as bunker-C oil and asphalts (residual oil), float on the seawater surface or are solidified with the passage of time and deposited at the bottom of the sea.

To the oil deposited at the bottom as described above, sediment particles or organisms are attached. When compressed air is injected to the deposited oil, mass transfer will occur, and thus gas will be discharged and separated from the oil, and the degassed oil will float.

Namely, during injection of compressed air, the mass transfer of oxygen and hydrocarbon in the air phase and the water phase occurs, and the gas exchange between the air phase and the water phase occurs by the concentration profiles of oxygen and hydrocarbon across the air-water interface.

The phenomenon resulting from the injection of compressed air will now be described in further detail.

A volatile organic pollutant contained in the oil is converted to a gas phase by the injected compressed air flow, and oxygen contained in the air is converted to a liquid phase.

The volatile organic pollutant, after converted to the gas phase, is volatilized as gas, and the degassed oil floats on the water surface.

At the same time as floating of the oil fractions, microorganisms or oil-eating superbacteria (it is known that about 20 kinds of such bacteria live in Korea, and among them, about 10 kinds live in the Yellow Sea) also float from the bottom of the sea. Herein, the oxygen converted to the liquid phase promotes the biodegradation of pollutants, and the microorganisms and the superbacteria are highly activated, thus facilitating the cleanup of the oil spill and the recovery of the ecosystem.

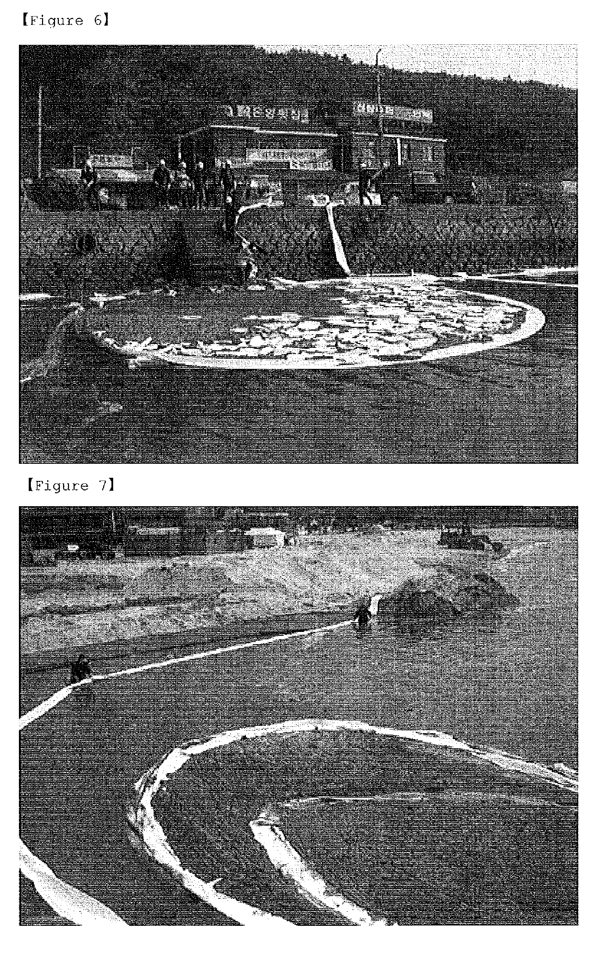

Next, the roll adsorbent is dragged in a trawl-like manner and collected in one place while the floated oil does not overflow (S106) (see FIG. 6).

If the floated oil is present in a mixture with bubbles, making it difficult to collect the oil in one place, the roll adsorbent is provided in a multiple configuration, such that it can be dragged step-by-step to collect the oil in one place (see FIG. 7).

After the floated oil has been collected in one place, the oil is scooped up and transferred to the outside (S108).

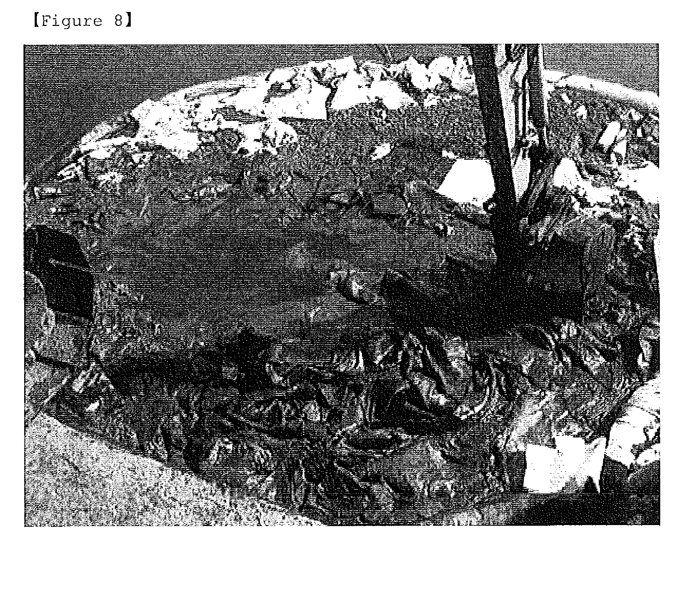

Herein, an adsorbent is introduced, and the oil is absorbed by the adsorbent. The oil is scooped up by an excavator (see FIG. 8) and placed in a collection container.

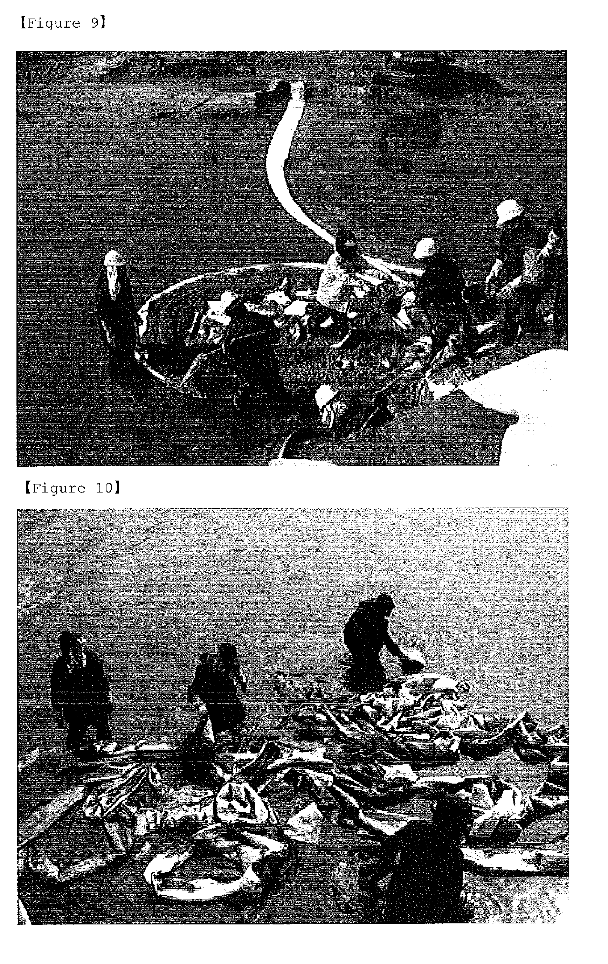

Next, the remaining bubbles and oil are collected in one place using a plastic shovel and a bamboo, and the oil is absorbed by an adsorbent and then scooped up by a bucket (see FIG. 9), thereby facilitating the scooping operation.

Finally, after completion of the oil scooping operation, the roll adsorbent used to collect the oil is used to absorb the remaining oil, and it is completely picked up (see FIG. 10) and placed in a collection container (S110).

Clean-up work carried out using a water pump and a high-pressure pump according to the prior art exceeded three months, but when cleanup work was carried out using air according to the present invention, water became clean after 20-25 days, suggesting that the work period could be shortened.

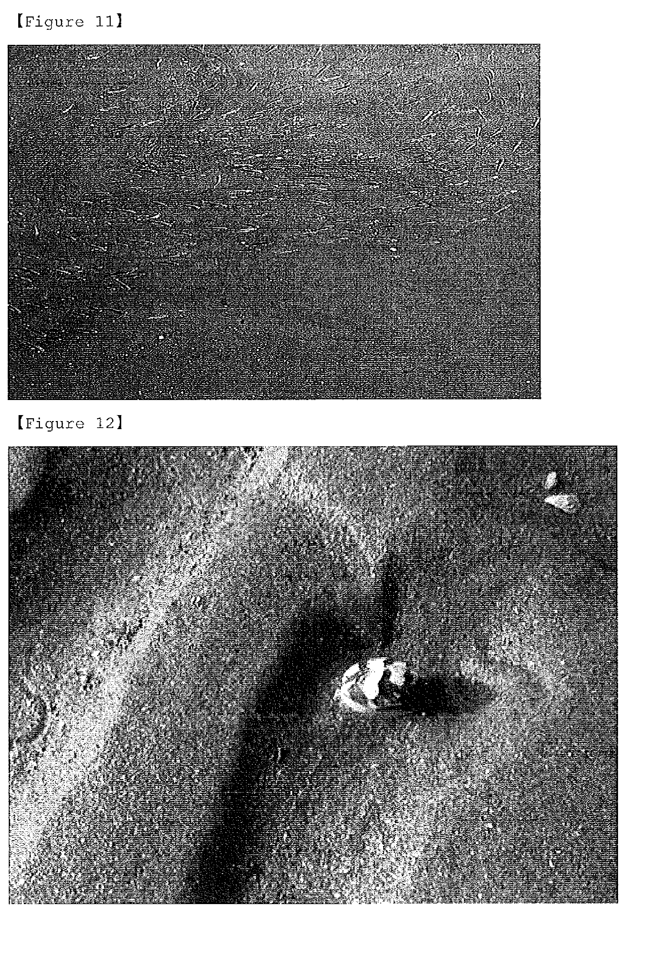

FIG. 11 shows that fries come together during a process in which work according to the first embodiment of the present invention is carried out.

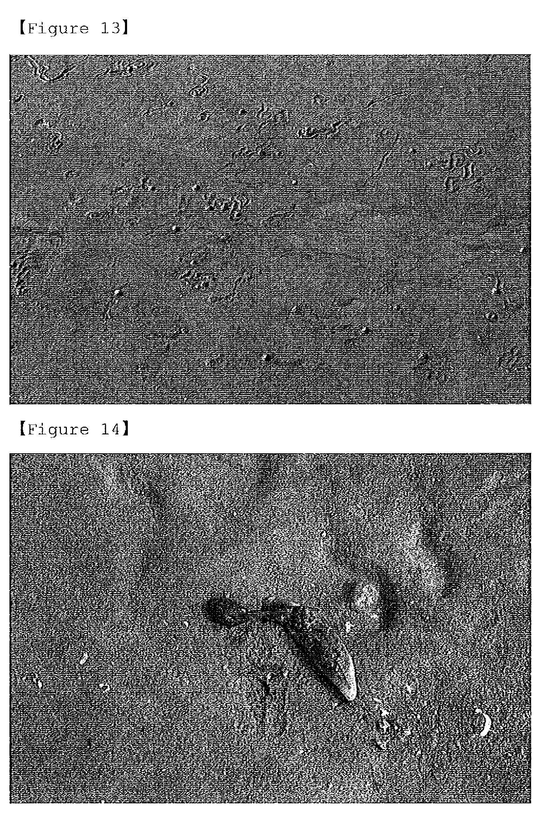

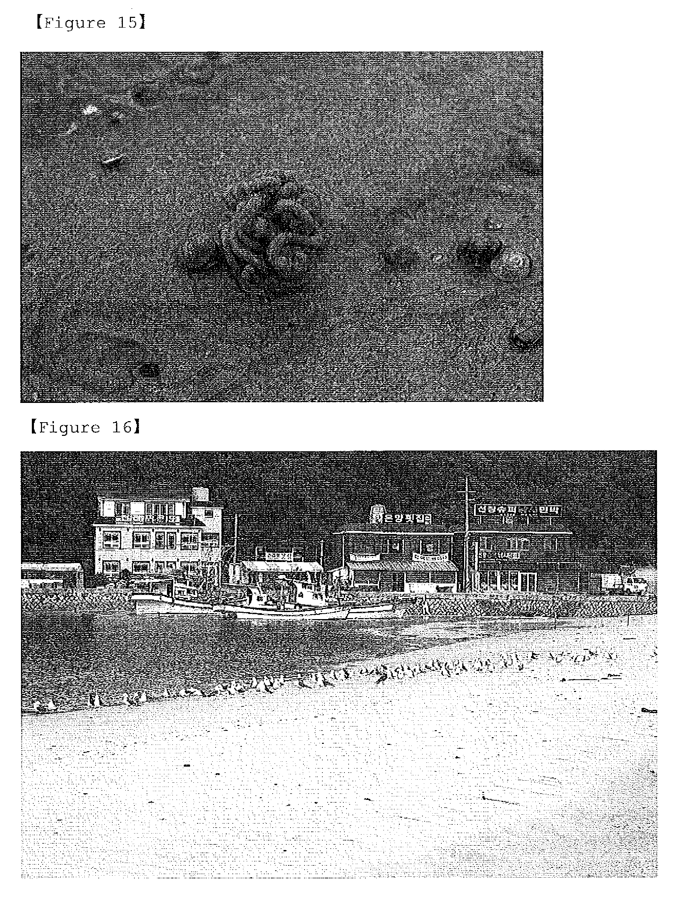

FIGS. 12 to 16 are photographs showing the ecosystem after removing oil according to the first embodiment of the present invention. As can be seen therein, as water becomes clean, the sandy beach and the coast become clean, and a food chain is formed so that various organisms, including shellfishes, algae and shells, are returned.

According to the present invention, by injecting compressed air, high-specific-gravity oil components (which are deposited and release toxic substances over a long period of time to cause damage to the environment) such as asphalt and tar can be physically removed to remove a major cause of damage to the environment, the remaining oil fractions can also be reduced to a naturally degradable level, and aerobic conditions can be formed to increase the natural degradation rate of the oil fractions.

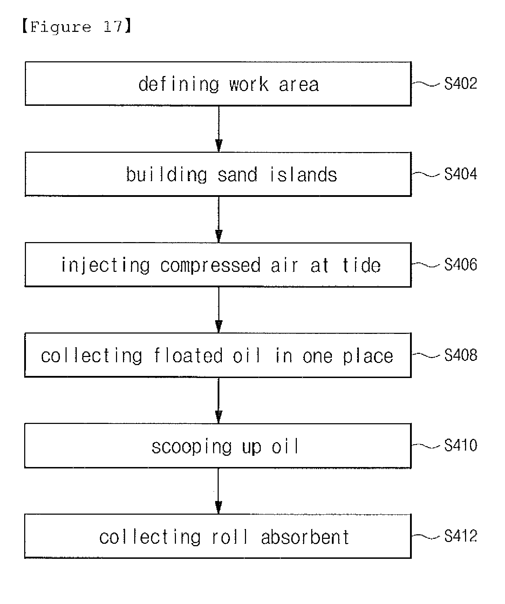

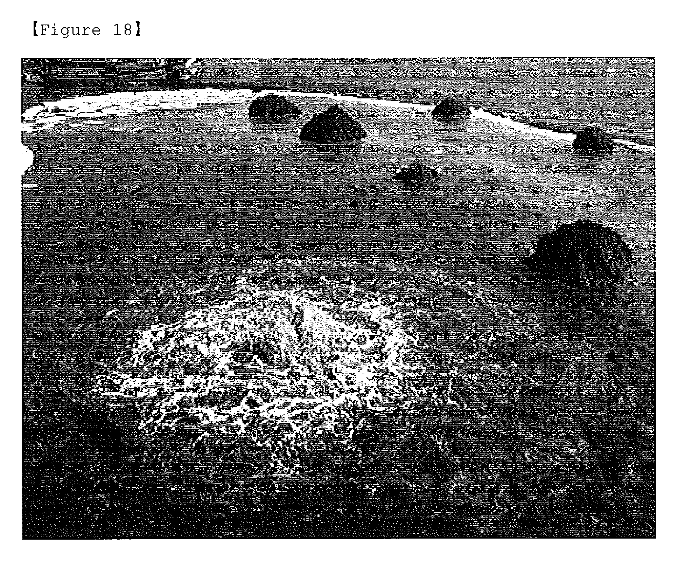

FIG. 17 is a process flow chart showing a method of removing oil according to a second embodiment of the present invention, and the method shown in FIG. 17 is applied to the case in which the bottom of the sea is exposed at low tide. FIG. 18 is a photograph showing a compressed air injection step in the method shown in FIG. 17.

The second embodiment is carried out in the same manner as the first embodiment, except that compressed air is injected after building sand islands. Thus, the same steps as those of the first embodiment will be omitted herein.

As shown in FIG. 17, a work area is defined (S402), and polluted sand is piled to make a plurality of small islands within the work area (S404). After water has entered the work area, an air jet is introduced into the water, and compressed air is injected through the air jet (S406) (see FIG. 18).

By doing so, the wavelength of water caused by the sand islands meets the wavelength of water caused by the air bubbles of compressed air, whereby the discharge of gas and the floating of oil can be maximized.

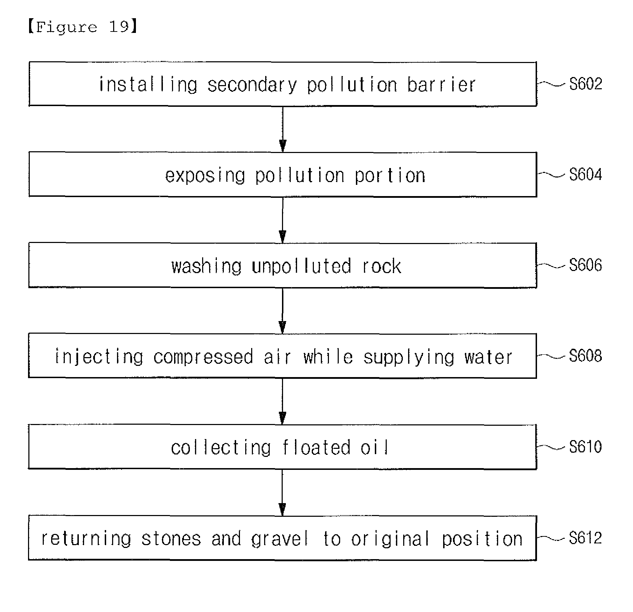

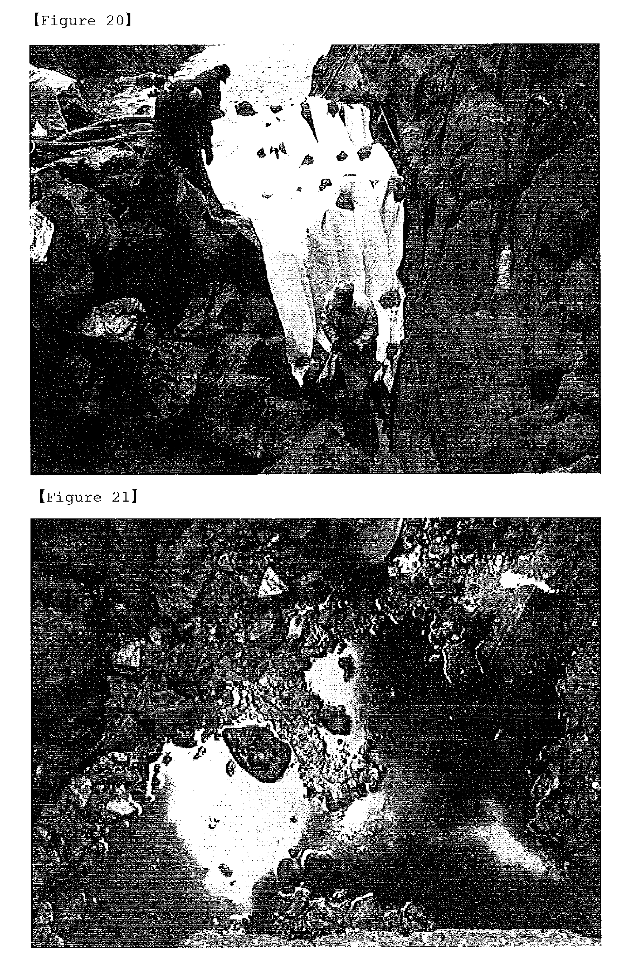

FIG. 19 is a process flow chart showing a method of removing oil according to a third embodiment of the present invention, and FIGS. 20 to 25 are photographs showing each step of the method shown in FIG. 19 and sequentially show operations of removing oil attached to rocks and present between rocks.

As shown therein, in order to prevent secondary pollution caused by introduction of oil into the work area or an outflow of oil from the work area, stones nearby the work area are stacked to form a secondary pollution barrier (S602).

Herein, the secondary pollution barrier is provided with a roll adsorbent (FIG. 20).

Then, unpolluted stones and gravel between rocks are removed to expose polluted portions, and the removed stones or gravel are placed in a bag, transferred to other places by a bag, and then, if necessary, washed (S604).

Then, the unpolluted upper portion of the rock is washed with a high-pressure washer and a water pump (S606).

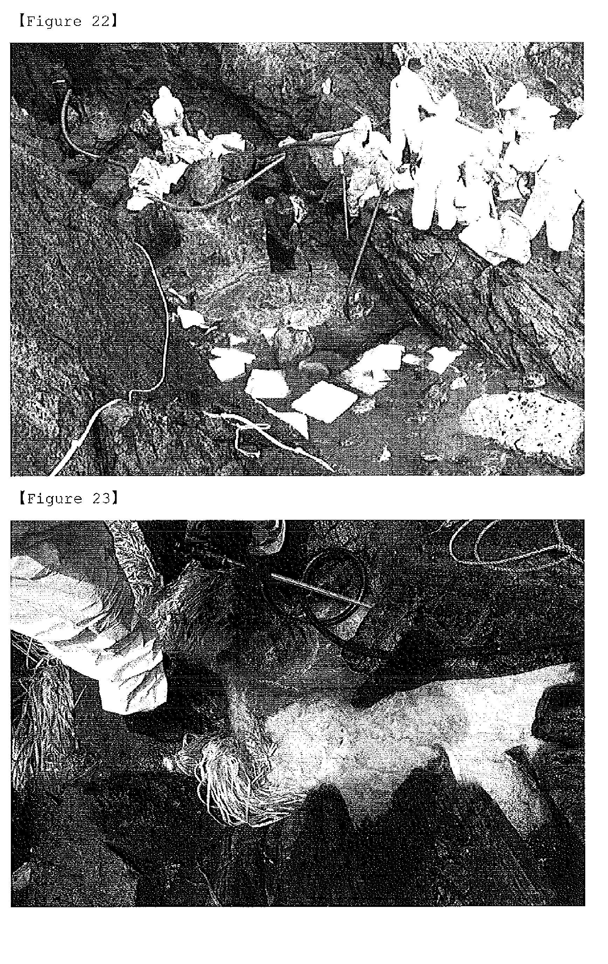

Then, the polluted lower portion of the rock, and the polluted portion between the rocks, that is, the portion having polluted sand, fine gravel and sedimentary soil (see FIG. 21), are supplied with water by means of a water pump, while an air jet is introduced thereto and compressed air is injected through the air jet (S608) (see FIG. 22).

Herein, if the gap or groove between rocks which cannot be lifted up is narrow, an elongate rod-shaped air jet is inserted into the gap or groove, and compressed air is injected through the air jet (see FIGS. 23 and 24).

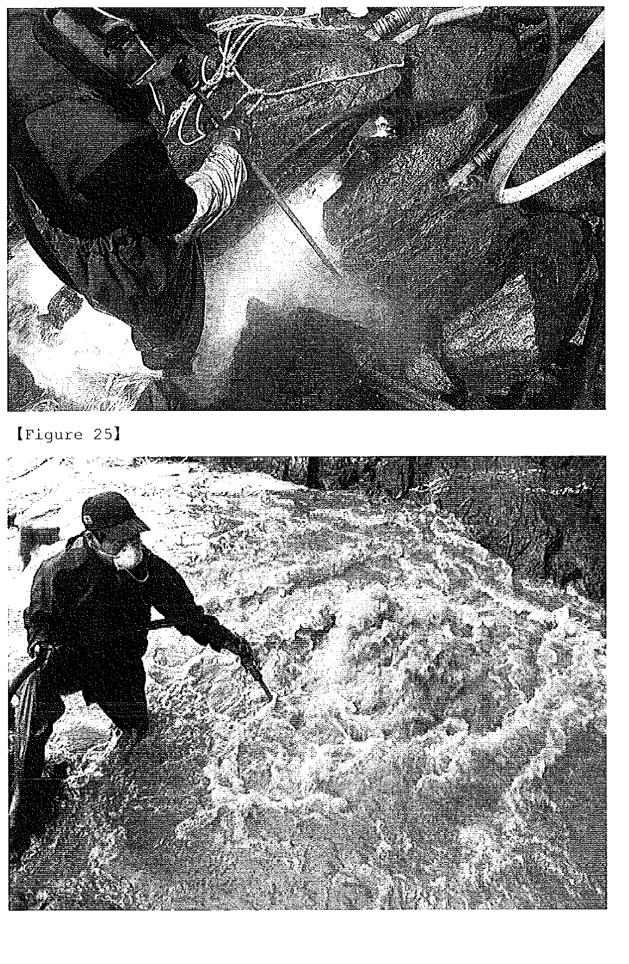

In the case of rocks that water enters, the air jet is introduced without supplying water, and compressed air is injected through the air jet (see FIG. 25).

Herein, by the interaction between water and compressed air, gas is separated from oil, while the oil floats.

The floated oil is collected by absorption with an adsorbent (S610).

After the oil on the rocks and between the rocks has been removed as described above, the above washed stones and gravel are returned to the original position (S612).

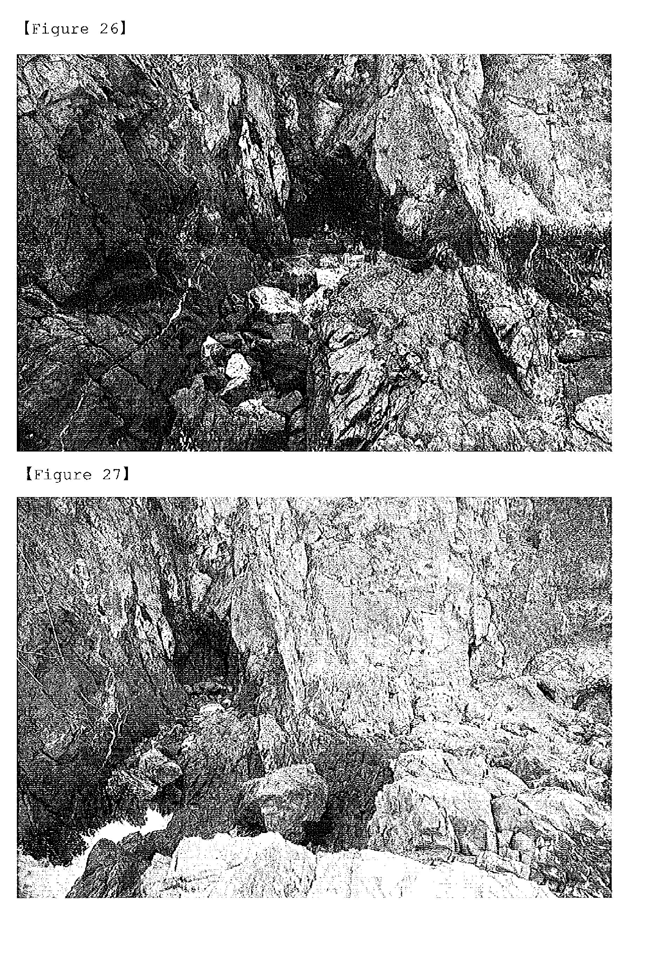

FIGS. 26 and 27 are photographs showing a comparison between before and after removing oil according to the third embodiment of the present invention. As can be seen therein, the oil deposited on the rocks before the work was completely removed by injection of compressed air, and thus the rocks were returned to their original color.

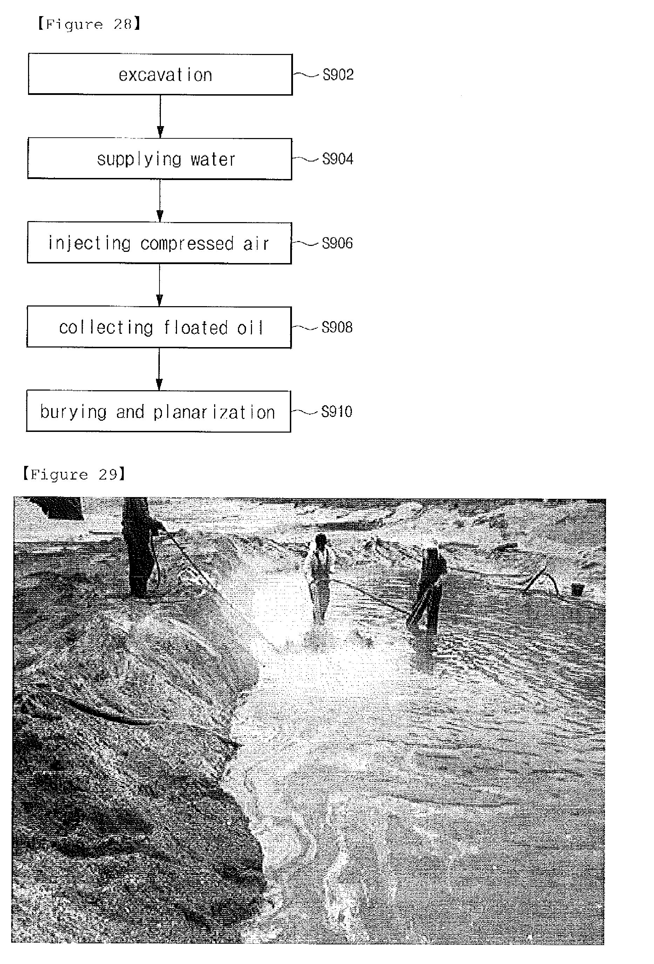

FIG. 28 is a process flow chart showing a method of removing oil from soil or sand according to a fourth embodiment of the present invention.

First, an area polluted with oil is excavated with an excavator to a predetermined depth, such that the portion polluted with oil is exposed, thus ensuring a work space (S902).

Roll adsorbent cloth is installed at the edge of the work space, such that introduction of oil into the work space or outflow of oil from the work space can be prevented (S904). However, at a position to which water can flow down due to its high land level, roll adsorbent cloth is provided in a multiple configuration.

The work space formed by excavation to a predetermined depth is supplied with water by means of a water pump, so that it is filled with water to a given depth (S906).

While the work space filled with water is continuously supplied with water, an air jet is introduced into the work space, and compressed air is injected through the air jet (S908).

Accordingly, by the energy of air bubbles of compressed air and the interaction between water and soil or sand, gas is discharged and separated from oil attached to soil or sand, and the oil floats on the water surface (see FIG. 29).

The oil floating on the water surface is absorbed with an adsorbent, and then collected (S910), thereby completely removing the oil.

The water filled in the work space is naturally or artificially drained, and then the work space is filled with fresh soil or sand and planarized (S912).

Meanwhile, oil deposited on the soil or sand resulting from the excavation process is removed by injecting compressed air to the soil or sand while supplying water to float the oil, and absorbing the floated oil with an adsorbent.

As described above, the oil removal method according to the present invention is an environmentally friendly method that uses compressed air. It is cost-effective and allows the use of an air jet constructed according to a specific area, so that it can remove oil regardless of the topology of an area. Also, the cleanup period can be shortened, and there is no risk of secondary pollution.

Particularly, in oil consisting of hydrocarbon, gas is discharged from the oil by the mass transfer between hydrocarbon and oxygen, while the oil becomes an organic material harmless to organisms.

Although the preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A method of removing pollutant oil deposited from the water surface using air, comprising: defining a work area by an oil boom, such that oil does not enter the work area or does not flow out of the work area; placing an adsorbent on the oil boom; introducing an air jet at the bottom below the water surface; injecting compressed air through the air jet, thereby raising water and sand or soil together with the compressed air, discharging gas from oil deposited at the bottom by the kinetic energy of air bubbles caused by the compressed air flow to degas the oil, and floating the degassed oil on the water surface; and removing the floated oil.

2. A method of removing pollutant oil deposited at the bottom of the beach, the bottom being exposed at low tide, the method comprising: piling polluted sand to make a plurality of small sand islands; after the tide had come in, defining a work area by an oil boom, such that oil does not enter the work area or does not flow out of the work area; placing an adsorbent on the oil boom; placing an adsorbent on the oil boom; introducing an air jet at the bottom below the water surface; injecting compressed air through the air jet, thereby raising water and sand or soil together with the compressed air, discharging gas from oil deposited at the bottom by the kinetic energy of air bubbles caused by the compressed air flow to degas the oil, and floating the degassed oil on the water surface; and removing the floated oil.

3. The method of Claim 1 or 2, wherein a roll adsorbent is provided within the area defined by the oil boom, so that the floated oil can be collected in one place.

4. The method of Claim 3, wherein, after the oil has floated, the roll adsorbent is dragged in a trawl-like manner to collect the oil in one place in such a manner that the oil does not overflow.

5. The method of Claim 4, wherein, if the floated oil is present in a mixture with bubbles, making it difficult to collect the oil in one place, the roll adsorbent is installed in a multiple configuration, such that it can be dragged step-by-step to collect the oil in one place.

6. The method of Claim 4 or 5, wherein, after the floated oil has been collected in one place, the oil is absorbed by an adsorbent, scooped up and placed in an external container.

7. The method of Claim 6, wherein, after completion of the scooping operation, the roll adsorbent used to collect the oil is used to absorb the remaining oil, pick up and placed in the container.

8. A method of removing pollutant oil attached to rocks or present between rocks, comprising: installing a secondary pollution barrier so as to prevent oil from flowing in or out of an area defined by the secondary pollution barrier; placing an adsorbent on the oil boom; placing an adsorbent on the oil boom; introducing an air jet at the bottom below the water surface; placing an air jet on polluted rocks or between polluted rocks while supplying water; injecting compressed air through the air jet, thereby raising water and sand or soil together with the compressed air, discharging gas from oil deposited at the bottom by the kinetic energy of air bubbles caused by the compressed air flow to degas the oil, and floating the degassed oil on the water surface; and removing the floated oil.

9. The method of Claim 8, wherein, after installation of the secondary pollution barrier, unpolluted stones and gravel between rocks are removed to expose polluted portions of the rocks, and unpolluted portions of the rocks are washed, and then the air jet is placed in water on or between the polluted portions of the rocks.

10. The method of Claim 8, wherein, if a gap or groove between the rocks is narrow, the air jet is made to have an elongated rod shape and is inserted into the gap or groove, and compressed air is injected through the air jet.

11. The method of Claim 8, wherein the floated oil is absorbed by an adsorbent and then collected.

12. A method of removing pollutant oil deposited on water-free sand or soil, comprising the steps of:
excavating an area polluted with oil to a predetermined depth, thus ensuring a work space;
supplying water to the work space so as to be filled with water;
placing an air jet in the work space while continuing to supply water;
injecting compressed air through the air jet, thereby raising water and sand or soil together with the compressed air, discharging gas from oil deposited at the bottom by the kinetic energy of air bubbles caused by the compressed air flow to degas the oil, and floating the degassed oil on the water surface;
absorbing the floated oil by an adsorbent and collecting the absorbed oil; and
draining water from the work space, filling the drained space with fresh soil or sand, and planarizing the area filled with the fresh soil or sand.
